(19) Europäisches Patentamt
European Patent Office
Office européen des brevets

(11) **EP 2 878 034 B1**

(12) **FASCICULE DE BREVET EUROPEEN**

(45) Date de publication et mention de la délivrance du brevet:
**27.04.2016 Bulletin 2016/17**

(21) Numéro de dépôt: **13758915.6**

(22) Date de dépôt: **25.07.2013**

(51) Int Cl.:
*H01M 10/46* (2006.01)     *H01M 10/48* (2006.01)
*B60L 11/18* (2006.01)     *B60L 7/10* (2006.01)
*H01M 10/44* (2006.01)

(86) Numéro de dépôt international:
**PCT/FR2013/051797**

(87) Numéro de publication internationale:
**WO 2014/016523 (30.01.2014 Gazette 2014/05)**

(54) **VÉHICULE COMPRENANT UNE BATTERIE ET DES MOYENS DE DÉTERMINATION D'UNE PUISSANCE MAXIMALE ADMISSIBLE POUR LA BATTERIE, ET PROCÉDÉ CORRESPONDANT**

FAHRZEUG MIT EINER BATTERIE UND EINEM MITTEL ZUR BESTIMMUNG DER MAXIMAL ZULÄSSIGEN LEISTUNG DER BATTERIE SOWIE ENTSPRECHENDES VERFAHREN

VEHICLE COMPRISING A BATTERY AND MEANS FOR DETERMINING A MAXIMUM ALLOWABLE POWER FOR THE BATTERY, AND CORRESPONDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2012 FR 1257311**

(43) Date de publication de la demande:
**03.06.2015 Bulletin 2015/23**

(73) Titulaire: **Renault s.a.s.**
**92100 Boulogne-Billancourt (FR)**

(72) Inventeurs:
• **SAINT-MARCOUX, Antoine**
**91120 Palaiseau (FR)**
• **OBERTI, Claire**
**75015 Paris (FR)**
• **GIRAUD, Marc-Henri**
**92130 Issy Les Moulineaux (FR)**
• **DELOBEL, Bruno**
**92130 Issy Les Moulineaux (FR)**

(56) Documents cités:
**US-A- 5 910 722**     **US-A1- 2009 218 987**
**US-A1- 2012 007 545**

• **QINGSHENG SHI ET AL: "An Improved Electric Vehicle Regenerative Braking Strategy Research", ADVANCES IN COMPUTER SCIENCE AND INFORMATION ENGINEERING : [PROCEEDING OF CSIE2012, 19-20 MAY 2012, ZHENGZHOU, CHINA], VOL. 2, BERLIN : SPRINGER, 20 mai 2012 (2012-05-20), pages 637-642, XP008161800, DOI: 10.1007/978-3-642-30223-7_101 ISBN: 978-3-642-30223-7**
• **JINGANG GUO ET AL: "Regenerative braking strategy for electric vehicles", INTELLIGENT VEHICLES SYMPOSIUM, 2009 IEEE, IEEE, PISCATAWAY, NJ, USA, 3 juin 2009 (2009-06-03), pages 864-868, XP031489956, ISBN: 978-1-4244-3503-6**

EP 2 878 034 B1

## Description

L'invention a pour objet les systèmes de gestion de batterie électrique, et en particulier les systèmes de gestion de batteries électriques embarquées et destinées à propulser un véhicule automobile.

Ces batteries peuvent soit être rechargées sur des bornes électriques lorsque le véhicule est à l'arrêt, soit être rechargées en récupérant, au travers du moteur électrique, une partie de l'énergie cinétique du véhicule lorsque celui-ci décélère. Une telle récupération d'énergie est couramment appelée freinage récupératif.

Les batteries peuvent se détériorer, ou vieillir, et perdre de leur capacité à stocker de l'énergie. Ce vieillissement dépend des conditions dans lesquelles les batteries ont été conservées, et également des conditions dans lesquelles les batteries sont utilisées lorsque qu'un véhicule roule.

Il a été proposé des systèmes de gestion de batterie (« BMS : Battery Management System » en langue anglaise) qui limitent la quantité de puissance fournie à la batterie de manière à ne pas l'endommager. On limite ainsi les courants circulant vers la batterie ou encore les tensions appliquées à la batterie. En outre, ces limitations sont en général calculées d'une part pour les situations de freinage avec récupération d'énergie et d'autre part pour les situations de charge normales, c'est-à-dire quand le véhicule est à l'arrêt et qu'une borne est utilisée.

La puissance maximale admissible par une batterie dans une situation de freinage est généralement élevée, et elle peut être appliquée pendant une durée courte de l'ordre de la dizaine de secondes et ce sans endommager les batteries. Pour la charge (au moyen d'une borne), la puissance est généralement plus faible, mais elle peut être appliquée pendant une période plus longue.

Lorsqu'un utilisateur se trouve dans une phase de freinage longue, par exemple, lors de la descente d'une longue pente, un freinage avec récupération d'énergie électrique de longue durée peut être mis en oeuvre, en utilisant la limitation de puissance élevée des phases de freinage. Ces longues phases de freinage peuvent endommager les batteries des véhicules si elles sont plus longues que la dizaine de seconde correspondant à une phase de freinage normale. En effet, une puissance élevée sera fournie à la batterie pendant une durée trop longue.

Par ailleurs, de manière classique, on conserve dans des cartographies les valeurs de puissance, qui peuvent être lues en fonction de l'état de charge de la batterie et de la température de la batterie. Deux cartographies peuvent être utilisées, une pour chacune des situations décrites ci-avant.

On mentionnera plus particulièrement les brevets et demandes de brevets US 5 910 722 A, US 2012/007545 A1 et US 2009/218987 A1 ainsi que les articles suivants de la littérature technique : QINSHENG SHI ET AL - "An improved Electric Vehicle Regenerative Braking Strategy Research", Advances in Computer Science And Information Engineering, 20 May 2012, pages 637-642; et JINGANG GUO ET AL - "Regenerative braking strategy for electric vehicles", Intelligent Vehicles Symposium, 2009 IEEE, 3 juin 2009, pages 864-868.

L'ensemble de ces sources décrivent des véhicules selon le préambule de la revendication 1, à savoir des véhicules automobiles à propulsion électrique ou hybride comprenant une batterie d'accumulation électrique rechargeable, un système de freinage permettant la récupération d'énergie, la batterie étant rechargeable lors de phases de freinage et lors de phases de charge durant lesquelles le véhicule est à l'arrêt sous le contrôle d'un système d'alimentation comprenant des moyens de détermination d'une puissance maximale admissible pour la batterie. Les documents US 5 910 722 A et QINSHENG SHI ET AL en particulier divulguent une diminution linéaire de la puissance maximale admissible pour la batterie au-dessus d'un certain niveau de charge. Le document US 2012/007545 A1 décrit deux modes de freinage régénératif qui suivent des lois de contrôle différentes pour la puissance maximale admissible. Le document US 2009/218987 A1 décrit deux cartographies de puissances maximales admissibles pour la batterie utilisées en fonction de l'état de dégradation de la batterie.

Un but de la présente invention est d'améliorer les systèmes d'alimentation électrique de batterie de véhicules, en particulier lors des phases de freinage longues.

Selon un mode de réalisation, il est proposé un véhicule automobile à propulsion électrique ou hybride comprenant une batterie d'accumulation électrique rechargeable, un système de freinage permettant la récupération d'énergie, la batterie étant rechargeable lors de phases de freinage et lors de phases de charge (par exemple lorsque le véhicule est à l'arrêt à une borne) sous le contrôle d'un système d'alimentation comprenant des moyens de détermination d'une puissance maximale admissible pour la batterie.

Selon une caractéristique générale du véhicule, les moyens de détermination de la puissance maximale admissible pour la batterie comprennent une première cartographie permettant de lire une première puissance maximale à partir de la température et de l'état de charge de la batterie, une deuxième cartographie permettant de lire une deuxième puissance maximale à partir de la température et de l'état de charge de la batterie, la première puissance maximale étant supérieure à la deuxième puissance maximale, la première cartographie comprenant des valeurs de première puissance maximale correspondant à une phase de freinage et la deuxième cartographie comprenant des valeurs de deuxième puissance maximale correspondant à une phase de charge de la batterie, et des moyens de calcul de ladite puissance maximale admissible pour la batterie configurés pour calculer la somme de la première puissance affectée d'un premier coefficient $\alpha(t)$ compris entre 0 et 1 et de la deuxième puissance affectée d'un deuxième coefficient égal

à 1-$\alpha(t)$.

On applique donc à chaque instant une limitation qui dépend à la fois d'une valeur lue dans une cartographie de valeurs correspondant à une phase de charge (valeurs peu élevées) et d'une valeur lue dans une cartographie de valeurs correspondant à une phase de freinage (valeurs élevées). Le premier coefficient est choisi de manière à obtenir une limitation choisie entre la première puissance maximale (s'il est égal à un), la deuxième puissance maximale (s'il est égal à zéro) et une pondération de ces deux puissances s'il est compris entre zéro et un.

Lors d'une longue phase de freinage, il est par exemple préférable de diminuer le premier coefficient de manière à obtenir une puissance maximale admissible pour la batterie plus faible que la première puissance lue, on protège ainsi la batterie contre le vieillissement.

Le véhicule peut comprendre en outre des moyens de mesure du courant circulant dans la batterie et des moyens de calcul instantanés du premier coefficient délivrant :

- une valeur de premier coefficient égale à un lors de la mise en fonctionnement du véhicule,
- une valeur de premier coefficient augmentée si le courant circulant dans la batterie mesuré est négatif,
- une valeur de premier coefficient diminuée si le courant circulant dans la batterie mesuré est supérieur à un seuil de courant, ou
- une valeur de premier coefficient augmentée si le courant circulant dans la batterie est compris entre zéro et ledit seuil de courant et que le premier coefficient avait été augmenté à l'instant

précédent ou une valeur de premier coefficient diminuée si le courant circulant dans la batterie est compris entre zéro et ledit seuil de courant et que le premier coefficient avait été diminué à l'instant précédent.

Un tel système fonctionne de manière itérative et délivre une nouvelle valeur de coefficient à chaque nouvelle itération, c'est-à-dire à un nouvel instant. Le système peut par exemple augmenter ou diminuer le coefficient de la même quantité à chaque itération.

On obtient un système qui détermine une valeur de coefficient en fonction du courant fourni à la batterie qui est négatif si la batterie délivre du courant, en décharge, et positif si la batterie reçoit du courant, en charge. En outre, le courant a généralement, une valeur plus élevée en freinage récupératif, on peut donc choisir le seuil de courant de manière à ce qu'il indique qu'une phase de freinage avec récupération d'énergie est mise en oeuvre.

Cette variante a notamment pour avantage de permettre d'obtenir des valeurs élevées de puissance admissible pour des durées très faibles, et ainsi assurer la recharge de la batterie sans l'endommager.

En outre, la puissance maximale autorisée peut diminuer lentement sur une longue phase de freinage, de manière à ne pas causer d'à-coups au conducteur.

En variante, le véhicule comprend en outre des moyens de mesure de la puissance moyenne fournie à la batterie pendant une période et des moyens de calcul instantané du premier coefficient délivrant :

- une valeur de premier coefficient égale à un lors de la mise en fonctionnement du véhicule,
- une valeur de premier coefficient augmentée si ladite puissance moyenne est inférieure à ladite deuxième valeur de puissance maximale, ou
- une valeur de premier coefficient diminuée si ladite puissance moyenne est supérieure à ladite deuxième valeur de puissance maximale.

Ainsi, on calcule à chaque instant le niveau moyen de puissance effectivement appliqué pendant ladite période. On diminue ou on augmente le coefficient en fonction de la deuxième valeur de puissance maximale, celle correspondant à une charge au moyen d'une borne. En effet, si la puissance moyenne est supérieure à la puissance maximale admissible pour une phase de charge, il est préférable de diminuer le coefficient afin de protéger la batterie.

La batterie peut être composée d'une ou plusieurs cellules, le système comprenant des moyens de mesure de la tension aux bornes d'une cellule et des moyens additionnels de limitation de la puissance maximale admissible pour la batterie fournissant une troisième valeur de puissance maximale calculée en fonction d'une valeur maximale de tension et de la tension de la cellule mesurée.

Ainsi, on met en oeuvre deux limitations, la valeur la plus basse étant conservée de manière à protéger la batterie.

Selon un mode de mise en oeuvre, il est proposé un procédé de régulation de la charge d'une batterie d'accumulation électrique rechargeable de véhicule automobile à propulsion électrique ou hybride comprenant un système de freinage permettant la récupération d'énergie, la batterie étant rechargeable lors de phases de freinage et lors de phases de charge (par exemple lorsque le véhicule est à l'arrêt à une borne).

Selon une caractéristique générale, le procédé comprend une étape de détermination d'une première puissance maximale correspondant à une phase de freinage (par exemple dans une cartographie à partir de la température de la batterie et de l'état de charge de la batterie), une étape de détermination d'une deuxième puissance maximale correspondant à une phase de charge de la batterie (par exemple dans une cartographie à partir de la température de la batterie et de l'état de charge de la batterie), la première puissance maximale étant supérieure à la deuxième puissance maximale, et une étape de sommations de la première puissance affectée d'un premier coefficient et de la deuxième puissance affectée d'un premier coefficient $\alpha(t)$ compris entre 0 et 1 et de la deuxième puissance affectée d'un deuxième coefficient égal à $1-\alpha(t)$, pour en déduire la puissance maximale admissible pour la batterie.

On peut on mesurer le courant circulant dans la batterie et fixer de manière instantanée le premier coefficient égal à :

- un lors de la mise en fonctionnement du véhicule,
- une valeur de premier coefficient augmentée si le courant circulant dans la batterie mesuré est négatif,
- une valeur de premier coefficient diminuée si le courant circulant dans la batterie mesuré est supérieur à un seuil de courant, ou
- une valeur de premier coefficient augmentée si le courant circulant dans la batterie est compris entre zéro et ledit seuil de courant et que le premier coefficient avait été augmenté à l'instant précédent ou une valeur de premier coefficient diminuée si le courant circulant dans la batterie est compris entre zéro et ledit seuil de courant et que le premier coefficient avait été diminué à l'instant précédent.

En variante, on peut on mesurer la puissance moyenne fournie à la batterie pendant une période et fixer de manière instantanée le premier coefficient égal à :

- un lors de la mise en fonctionnement du véhicule,
- une valeur de premier coefficient augmentée si ladite puissance moyenne est inférieure à ladite deuxième valeur de puissance maximale, ou
- une valeur de premier coefficient diminuée si ladite puissance moyenne est supérieure à ladite deuxième valeur de puissance maximale.

La batterie peut être composée d'une ou plusieurs cellules, et l'on mesure la tension aux bornes d'une cellule, on limite en outre la puissance maximale admissible pour la batterie à partir d'une troisième valeur de puissance maximale calculée en fonction d'une valeur maximale de tension et de la tension de la cellule mesurée.

D'autres buts, caractéristiques et avantages apparaîtront à la lecture de la description suivante donnée uniquement en tant qu'exemple non limitatif et faite en référence aux dessins annexés sur lesquels :

- la figure 1 illustre l'obtention des cartographies,
- la figure 2 illustre de manière schématique un système selon l'invention,
- la figure 3 illustre une variante d'un mode de mise en oeuvre et de réalisation selon l'invention,
- la figure 4 illustre une autre variante d'un mode de mise en oeuvre et de réalisation selon l'invention,
- les figures 5 et 6 illustrent encore une autre variante d'un mode de mise en oeuvre et de réalisation selon l'invention.

Pour une batterie de véhicule automobile comprenant une ou plusieurs cellules individuelles, l'élaboration de cartographies puissances maximales admissibles peut être mise en oeuvre au moyen de cartographies de la résistance interne d'une cellule de batterie (notée $DCR_{cell}$). Ces cartographies peuvent être obtenues par des étapes préalables de calibration, et elles permettent de lire cette résistance en fonction de l'état de charge de la batterie et de la température de la batterie. L'état de charge de la batterie BSOC dépend directement des tensions de circuit ouvert de cellules OCV, et peut donc être mesuré au moyen de capteurs de tensions.

On peut également obtenir par calibration la tension maximale autorisée $V_{LimitePIN}$ pour une cellule traversée par un courant lors d'une phase de freinage avec récupération d'énergie, et la tension maximale autorisée $V_{LimitePCHG}$ par une cellule traversée par un courant lors d'une phase de charge.

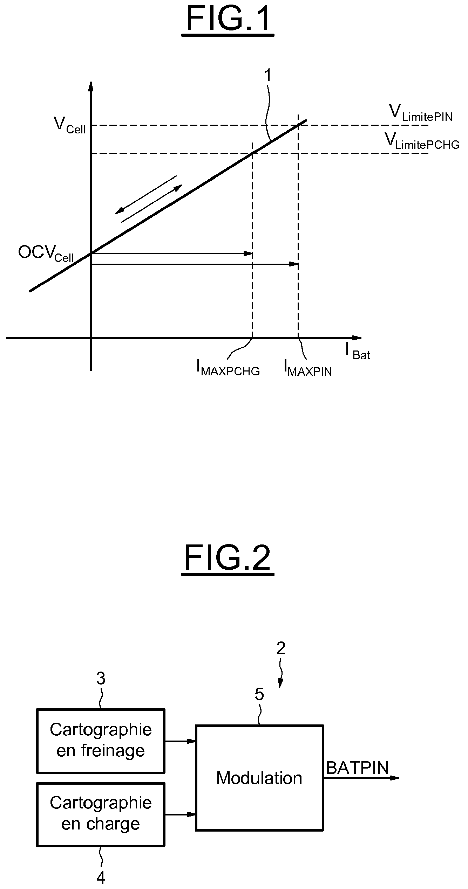

Sur la figure 1, on a représenté l'évolution aux bornes d'une cellule de batterie en fonction du courant qui la traverse (droite 1). La tension aux bornes d'une cellule de batterie $V_{cell}$ est égale à la tension de circuit ouvert OCV pour un courant $I_{BAT}$ nul. Cette tension évolue avec une pente liée à la résistance de la cellule $DCR_{cell}$ qui est lue dans une cartographie. Avec les valeurs $V_{LimitePIN}$ et $V_{LimitePCHG}$ déterminées préalablement on peut obtenir les valeurs correspondantes de courant notées $I_{MAXPIN}$ pour le courant maximal autorisé en phase de freinage et $I_{MAXPCHG}$ pour le courant maximal autorisé en phase de charge. Bien qu'une résolution graphique soit possible pour déterminer les puissances maximales admissibles pour la batterie pour une phase de charge et pour une phase de freinage, on peut également les obtenir au moyen de l'équation 1 :

$$P_{BAT}^{MAXPIN} = \frac{V_{LimitePIN} - OCV}{DCR_{cell}} \cdot V_{LimitePIN}$$

$$P_{BAT}^{MAXPCHG} = \frac{V_{LimitePCHG} - OCV}{DCR_{cell}} \cdot V_{LimitePCHG} \qquad EQ.1$$

Avec :

$P_{BAT}^{MAXPIN}$ : Puissance maximale autorisée lors d'une phase de freinage, et

$P_{BAT}^{MAXPCHG}$ : Puissance maximale autorisée lors d'une phase de charge.

On peut ensuite former une première cartographie comprenant des valeurs de puissance maximale $P_{BAT}^{MAXPIN}$ en fonction de la température et de l'état de charge de la batterie, et une deuxième cartographie comprenant des valeurs de puissance maximale $P_{BAT}^{MAXPCHG}$ en fonction de la température et de l'état de charge de la batterie.

On obtient ainsi, à chaque instant (noté t) une puissance maximale admissible pour la batterie calculable avec l'équation 2 :

$$BATPIN(t) = \alpha(t) \cdot BATPIN_{POWERMAP}(t) + (1 - \alpha(t)) \cdot ChaPow_{POWERMAP}(t) \quad EQ.2$$

Avec :

$BATPIN(t)$ : Puissance maximale admissible pour la batterie à l'instant t,
$BATPIN_{POWERMAP}(t)$ : Puissance maximale en phase de freinage à l'instant t, obtenue dans une des cartographies,
$ChaPow_{POWERMAP}(t)$ : Puissance maximale en phase de charge à l'instant t, obtenue dans une des cartographies, et
$\alpha(t)$ : Coefficient compris entre zéro et un.

On peut noter que si le coefficient $\alpha(t)$ est égal à 1, la puissance admissible est la puissance admissible en freinage récupératif, qui est une valeur élevée. Si le coefficient est égal à zéro, la puissance admissible est la puissance admissible en phase de charge, qui est une valeur faible qui peut être appliquée longtemps et ce sans endommager la batterie.

Sur la figure 2, on a représenté un système 2 d'alimentation comprenant des moyens de détermination d'une puissance maximale admissible notamment apte à mettre en oeuvre le calcul de l'équation 2. En utilisant d'une part une cartographie 3 comprenant des valeurs correspondant aux phases de freinage et d'autre part une cartographie 4 comprenant des valeurs correspondant aux phases de charge, on peut utiliser des moyens de calcul ou de modulation 5 destinés à fournir la valeur $BATPIN(t)$.

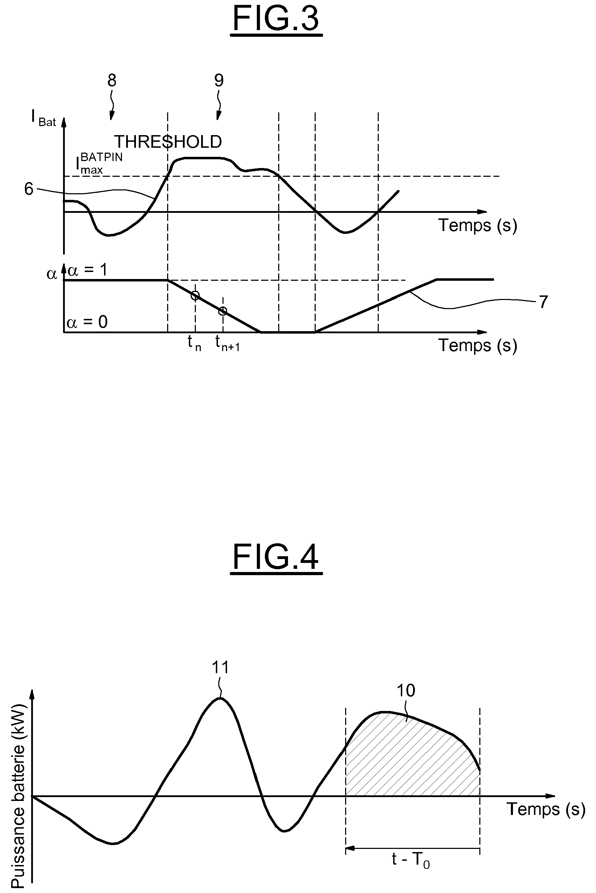

On va maintenant décrire plus en détail, en se référant à la figure 3, une variante de calcul du coefficient $\alpha(t)$.

On peut par exemple choisir $\alpha(t)$ nul au démarrage du véhicule, c'est-à-dire pour t égal à zéro. Ensuite, si pour une itération (notée $t_n$) la batterie est dans une phase de décharge, le courant $I_{BAT}$ étant négatif à l'instant $t_n$, on sait qu'il est possible d'augmenter le coefficient $\alpha(t)$ pour la prochaine itération ($t_{n+1}$) de manière à autoriser une plus grande puissance admissible. Bien entendu, le coefficient $\alpha(t)$ reste toujours compris entre zéro et 1. On obtient donc une augmentation dans une phase de décharge comme indiqué dans l'équation 3 :

$$\alpha(t_{n+1}) = \min(1, \alpha(t_n) + \rho_0) \quad EQ.3$$

Avec :

$\rho_0$ : constante choisie préalablement

Si le courant est supérieur à un seuil de courant suffisamment élevé pour illustrer le courant fourni à la batterie lors d'une phase de freinage avec récupération d'énergie noté $I_{max}^{BATPIN}\_THRESHOLD$, qui peut dépendre également de la température et de l'état de charge et donc être lu dans une cartographie, on sait que l'on est en phase de freinage et il est donc préférable de diminuer le coefficient $\alpha(t)$, comme indiqué dans l'équation 4 :

$$\alpha\left(t_{n+1}\right) = \max\left(0, \alpha\left(t_n\right) - \rho_0\right) \quad EQ.4$$

Enfin, si le courant qui traverse la batterie est inférieur à ce seuil $I_{max}^{BATPIN}\_THRESHOLD$ mais qu'il est positif, on peut augmenter le coefficient $\alpha(t)$ s'il était en train d'augmenter à l'itération précédente ($t_{n-1}$), ou le diminuer s'il était en train de diminuer, tout en le limitant par zéro et un, comme indiqué dans l'équation 5 :

$$\alpha\left(t_{n+1}\right) = \max\left[\min\left\{\alpha\left(t_n\right) + \left\{\alpha\left(t_n\right) - \alpha\left(t_{n-1}\right)\right\}, 1\right\}, 0\right] \quad EQ.5$$

Sur la figure 3, on a représenté un exemple de courbe 6 d'évolution du courant traversant la batterie $I_{BAT}$ en fonction du temps. On a également représenté sur cette figure une courbe 7 de l'évolution de la valeur du coefficient $\alpha(t)$.
On peut noter que comme indiqué ci avant, le courant est tout d'abord soit négatif, soit inférieur au seuil (période 8), comme il était à l'instant initial égal à un, il reste à cette valeur. Ensuite, dans une phase de freinage (période 9), le courant dépasse le seuil $I_{max}^{BATPIN}\_THRESHOLD$ et le coefficient diminue, par exemple entre les instants $t_n$ et $t_{n+1}$ et ce jusqu'à atteindre zéro. Ainsi, si la phase de freinage est longue, la puissance admissible sera faible de manière à ne pas endommager la batterie.
En outre, on peut choisir la constante $\rho_0$ de manière à réduire ou augmenter plus ou moins rapidement le coefficient, et donc la puissance maximale admissible.
En variante, on peut déterminer le coefficient à partir du niveau moyen de puissance effectivement appliquée à la batterie. On peut équiper le système de moyens de mesure du courant traversant la batterie $I_{BAT}$ et de moyens de mesure de la tension aux bornes de la batterie $V_{BAT}$. En choisissant une période fixe notée $T_0$, la puissance moyenne $PowerAverage(t)$ peut s'écrire :

$$PowerAverage(t) = \int_{t-T_0}^{t} V_{BAT}(\tau) \cdot I_{BAT}(\tau) \cdot d\tau \quad EQ.6$$

Sur la figure 4 on a représenté par des hachures 10 cette puissance moyenne, sur une courbe 11 montrant l'évolution de la puissance en fonction du temps.
On peut ainsi fixer le coefficient $\alpha(t)$ à un au démarrage, et, si la puissance moyenne $PowerAverage(t)$ est supérieure à la puissance maximale correspondant à une phase de charge $ChaPow_{POWERMAP}(t)$, on peut augmenter $\alpha(t)$ par exemple en appliquant l'équation EQ.3 de la variante précédente, ou diminuer $\alpha(t)$ si la puissance moyenne $PowerAverage(t)$ est supérieure à la puissance maximale correspondant à une phase de charge $ChaPow_{POWERMAP}(t)$ (équation EQ.4).

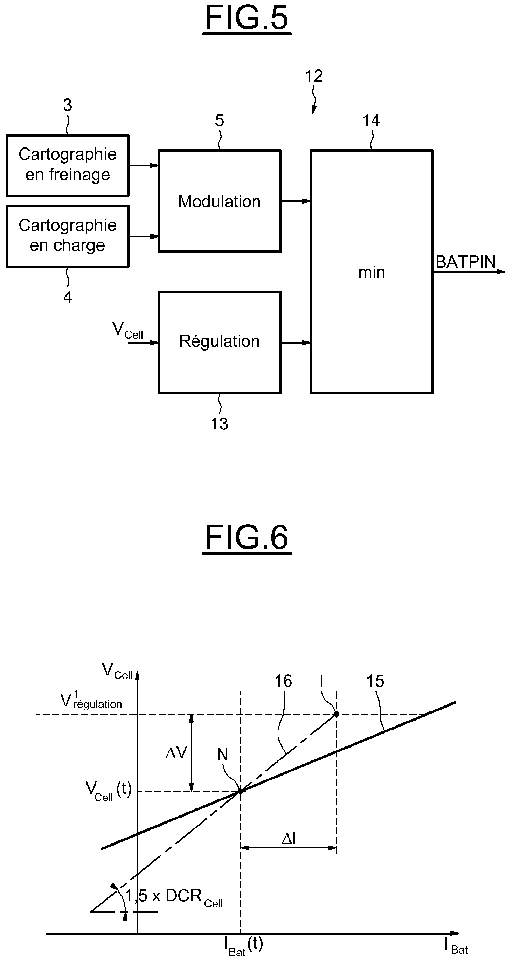

Sur la figure 5, on a représenté un autre système 12, comprenant en outre des deux cartographies des moyens 13 de régulation en fonction de la tension maximale $V_{LimitePIN}$ d'une cellule en freinage récupératif, par exemple obtenue dans une cartographie comme indiqué ci-avant. A partir de cette valeur et de la tension aux bornes d'une cellule $V_{cell}$, il est possible de déterminer l'augmentation autorisée du courant et de la tension de manière à ne pas dépasser la limite $V_{LimitePIN}$. On peut en déduire une valeur de puissance et de manière à protéger la batterie avec par exemple des moyens 14 de détermination de la valeur minimale entre cette puissance et la puissance $BATPIN(t)$.
Comme illustré sur la figure 6, la tension aux bornes d'une cellule $V_{cell}$ varie de façon linéaire (droite 15), par exemple avec une pente égale à la résistance d'une cellule $DCR_{cell}$. En connaissant la valeur $V_{LimitePIN}$, on peut déterminer la variation autorisée de tension $\Delta V$ à partir de la valeur instantanée $V_{cell}(t)$ pour un courant $I_{bat}(t)$ de manière à ne pas dépasser $V_{LimitePIN}$. En outre, on peut, pour davantage de sécurité, déterminer une valeur de variation de courant autorisée $\Delta I$ réduite. A cet effet, on détermine l'intersection I de la droite 16 passant par le point N et de pente 1,5 fois $DCR_{cell}$, avec la limite de tension autorisée $V_{LimitePIN}$. En outre, on peut obtenir une autre valeur de puissance maximale autorisée $BATPIN_{reg}(t)$ au moyen de l'équation 7 :

$$BATPIN_{reg}(t) = \left\{V_{LimitePIN}\right\} \times \left\{I_{bat}(t) + \Delta I\right\} \quad EQ.7$$

Avec :

$$\Delta I = \frac{V_{LimitePIN} - V_{cell}}{1.5 \times DCR_{cell}} \quad EQ.8$$

Bien entendu, on peut choisir une autre valeur pour multiplier la pente de la droite, mais il est préférable de la choisir supérieure à un.

La valeur BATPIN$_{reg}$(t) peut être comparée à la valeur BATPIN(t), par exemple dans un système décrit en référence à la figure 5.

On obtient une limitation de la puissance maximale admissible par une batterie qui s'adapte en fonction de l'utilisation du véhicule, et qui peut être mise en oeuvre par des moyens de calculs embarqués au sein d'un véhicule.

## Revendications

1. Véhicule automobile à propulsion électrique ou hybride comprenant une batterie d'accumulation électrique rechargeable, un système de freinage permettant la récupération d'énergie, la batterie étant rechargeable lors de phases de freinage et lors de phases de charge durant lesquelles le véhicule est à l'arrêt sous le contrôle d'un système d'alimentation (2, 12) comprenant des moyens de détermination d'une puissance maximale admissible pour la batterie (BATPIN), **caractérisé en ce que** les moyens de détermination de la puissance maximale admissible pour la batterie comprennent une première cartographie (3) permettant de lire une première puissance maximale ($BATPIN_{POWERMAP}$(t)) à partir de la température et de l'état de charge de la batterie, une deuxième cartographie (4) permettant de lire une deuxième puissance maximale ($ChaPow_{POWERMAP}$(t)) à partir de la température et de l'état de charge de la batterie, la première puissance maximale étant supérieure à la deuxième puissance maximale, la première cartographie comprenant des valeurs de première puissance maximale correspondant à une phase de freinage et la deuxième cartographie comprenant des valeurs de deuxième puissance maximale correspondant à une phase de charge de la batterie, et des moyens de calcul (5) de ladite puissance maximale admissible pour la batterie, configurés pour calculer la somme de la première puissance affectée d'un premier coefficient $\alpha(t)$ compris entre 0 et 1 et de la deuxième puissance affectée d'un deuxième coefficient égal à 1-$\alpha(t)$.

2. Véhicule selon la revendication 1, comprenant en outre des moyens de mesure du courant circulant dans la batterie ($I_{bat}$) et des moyens de calcul instantanés du premier coefficient $\alpha(t)$ délivrant :

   - une valeur de premier coefficient égale à un lors de la mise en fonctionnement du véhicule,
   - une valeur de premier coefficient augmentée si le courant circulant dans la batterie mesuré est négatif,
   - une valeur de premier coefficient diminuée si le courant circulant dans la batterie mesuré est supérieur à un seuil de courant, ou
   - une valeur de premier coefficient augmentée si le courant circulant dans la batterie est compris entre zéro et ledit seuil de courant et que le premier coefficient avait été augmenté à l'instant précédent ou une valeur de premier coefficient diminuée si le courant circulant dans la batterie est compris entre zéro et ledit seuil de courant et que le premier coefficient avait été diminué à l'instant précédent.

3. Véhicule selon la revendication 1, comprenant en outre des moyens de mesure de la puissance moyenne fournie à la batterie pendant une période ($PowerAverage$(t)) et des moyens de calcul instantané du premier coefficient $\alpha(t)$ délivrant :

   - une valeur de premier coefficient égale à un lors de la mise en fonctionnement du véhicule,
   - une valeur de premier coefficient augmentée si ladite puissance moyenne est inférieure à ladite deuxième valeur de puissance maximale, ou
   - une valeur de premier coefficient diminuée si ladite puissance moyenne est supérieure à ladite deuxième valeur de puissance maximale.

4. Véhicule selon l'une quelconque des revendications précédentes, dans lequel la batterie est composée d'une ou plusieurs cellules, le système comprenant des moyens de mesure de la tension aux bornes d'une cellule et des moyens additionnels de limitation (13) de la puissance maximale admissible pour la batterie fournissant une troisième valeur de puissance maximale calculée en fonction d'une valeur maximale de tension et de la tension de la cellule mesurée.

**5.** Procédé de régulation de la charge d'une batterie d'accumulation électrique rechargeable de véhicule automobile à propulsion électrique ou hybride comprenant un système de freinage permettant la récupération d'énergie, la batterie étant rechargeable lors de phases de freinage et lors de phases de charge durant lesquelles le véhicule est à l'arrêt, **caractérisé en ce qu'**il comprend une étape de détermination d'une première puissance maximale ($BATPIN_{POWERMAP}(t)$) correspondant à une phase de freinage, une étape de détermination d'une deuxième puissance maximale ($ChaPow_{POWERMAP}(t)$) correspondant à une phase de charge de la batterie, la première puissance maximale étant supérieure à la deuxième puissance maximale, et une étape de sommations de la première puissance affectée d'un premier coefficient $\alpha(t)$ compris entre 0 et 1 et de la deuxième puissance affectée d'un deuxième coefficient égal à $1-\alpha(t)$, pour en déduire la puissance maximale admissible pour la batterie.

**6.** Procédé selon la revendication 5, dans lequel on mesure le courant circulant dans la batterie ($I_{bat}$) et on fixe de manière instantanée le premier coefficient $\alpha(t)$ égal à :

- un lors de la mise en fonctionnement du véhicule,
- une valeur de premier coefficient augmentée si le courant circulant dans la batterie mesuré est négatif,
- une valeur de premier coefficient diminuée si le courant circulant dans la batterie mesuré est supérieur à un seuil de courant, ou
- une valeur de premier coefficient augmentée si le courant circulant dans la batterie est compris entre zéro et ledit seuil de courant et que le premier coefficient avait été augmenté à l'instant précédent ou une valeur de premier coefficient diminuée si le courant circulant dans la batterie est compris entre zéro et ledit seuil de courant et que le premier coefficient avait été diminué à l'instant précédent.

**7.** Procédé selon la revendication 5, dans lequel on mesure la puissance moyenne fournie à la batterie pendant une période ($PowerAverage(t)$) et fixe de manière instantanée le premier coefficient $\alpha(t)$ égal à :

- un lors de la mise en fonctionnement du véhicule,
- une valeur de premier coefficient augmentée si ladite puissance moyenne est inférieure à ladite deuxième valeur de puissance maximale, ou
- une valeur de premier coefficient diminuée si ladite puissance moyenne est supérieure à ladite deuxième valeur de puissance maximale.

**8.** Procédé selon l'une quelconque des revendications 5 à 7, dans lequel la batterie est composée d'une ou plusieurs cellules, et l'on mesure la tension aux bornes d'une cellule, on limite en outre la puissance maximale admissible pour la batterie à partir d'une troisième valeur de puissance maximale calculée en fonction d'une valeur maximale de tension et de la tension de la cellule mesurée.

**Patentansprüche**

**1.** Kraftfahrzeug mit elektrischem oder hybridem Antrieb, das eine wiederaufladbare elektrische Speicherbatterie enthält, wobei ein Bremssystem die Energierückgewinnung ermöglicht, wobei die Batterie in Bremsphasen und in Ladehasen wiederaufladbar ist, während denen das Fahrzeug steht, unter der Steuerung eines Versorgungssystems (2, 12), das Einrichtungen zur Bestimmung einer zulässigen Höchstleistung für die Batterie (BATPIN) enthält, **dadurch gekennzeichnet, dass** die Einrichtungen zur Bestimmung der zulässigen Höchstleistung für die Batterie ein erstes Kennfeld (3), das es ermöglicht, eine erste Höchstleistung (BATPIN$_{POWERMAP}$(t)) ausgehend von der Temperatur und vom Ladezustand der Batterie zu lesen, ein zweites Kennfeld (4), das es ermöglicht, eine zweite Höchstleistung (ChaPow$_{POWERMAP}$(t)) ausgehend von der Temperatur und vom Ladezustand der Batterie zu lesen, wobei die erste Höchstleistung höher ist als die zweite Höchstleistung, wobei das erste Kennfeld Werte einer ersten Höchstleistung enthält, die einer Bremsphase entsprechen, und das zweite Kennfeld Werte einer zweiten Höchstleistung enthält, die einer Ladephase der Batterie entsprechen, und Einrichtungen (5) zur Berechnung der zulässigen Höchstleistung für die Batterie enthalten, die konfiguriert sind, die Summe der ersten Leistung, der ein erster Koeffizient $\alpha$(t) zwischen 0 und 1 zugeordnet ist, und der zweiten Leistung, der ein zweiter Koeffizient gleich $1-\alpha$(t) zugeordnet ist, zu berechnen.

**2.** Fahrzeug nach Anspruch 1, das außerdem Einrichtungen zur Messung des in der Batterie ($I_{bat}$) fließenden Stroms und Einrichtungen zur augenblicklichen Berechnung des ersten Koeffizienten $\alpha$(t) enthält, die liefern:

- einen ersten Koeffizientenwert gleich Eins bei der Inbetriebnahme des Fahrzeugs,

- einen erhöhten ersten Koeffizientenwert, wenn der gemessene in der Batterie fließende Strom negativ ist,
- einen verringerten ersten Koeffizientenwert, wenn der gemessene in der Batterie fließende Strom höher als eine Stromschwelle ist, oder
- einen erhöhten ersten Koeffizientenwert, wenn der in der Batterie fließende Strom zwischen Null und der Stromschwelle liegt und der erste Koeffizient im vorhergehenden Augenblick erhöht wurde, oder einen verringerten ersten Koeffizientenwert, wenn der in der Batterie fließende Strom zwischen Null und der Stromschwelle liegt und der erste Koeffizient im vorhergehenden Augenblick verringert wurde.

**3.** Fahrzeug nach Anspruch 1, das außerdem Einrichtungen zur Messung der mittleren Leistung, die an die Batterie während einer Periode geliefert wird (PowerAverage(t)), und Einrichtungen zur augenblicklichen Berechnung des ersten Koeffizienten $\alpha(t)$ enthält, die liefern:

- einen ersten Koeffizientenwert gleich Eins bei der Inbetriebnahme des Fahrzeugs,
- einen erhöhten ersten Koeffizientenwert, wenn die mittlere Leistung niedriger ist als der zweite Höchstleistungswert, oder
- einen verringerten ersten Koeffizientenwert, wenn die mittlere Leistung höher ist als der zweite Höchstleistungswert.

**4.** Fahrzeug nach einem der vorhergehenden Ansprüche, wobei die Batterie aus einer oder mehreren Zellen besteht, wobei das System Einrichtungen zur Messung der Spannung an den Klemmen einer Zelle und zusätzliche Begrenzungseinrichtungen (13) der zulässigen Höchstleistung für die Batterie enthält, die einen dritten Höchstleistungswert liefern, der abhängig von einem Spannungshöchstwert und von der gemessenen Spannung der Zelle berechnet wird.

**5.** Verfahren zur Regelung der Ladung einer wiederaufladbaren elektrischen Speicherbatterie eines Kraftfahrzeugs mit elektrischem oder hybridem Antrieb, das ein Bremssystem enthält, das die Energierückgewinnung erlaubt, wobei die Batterie in Bremsphasen und in Ladephasen wiederaufladbar ist, während denen das Fahrzeug steht, **dadurch gekennzeichnet, dass** es einen Schritt der Bestimmung einer ersten Höchstleistung (BATPIN$_{POWERMAP}$ (t)) entsprechend einer Bremsphase, einen Schritt der Bestimmung einer zweiten Höchstleistung (ChaPow$_{POWERMAP}$ (t)) entsprechend einer Ladephase der Batterie, wobei die erste Höchstleistung höher ist als die zweite Höchstleistung, und einen Schritt von Summierungen der ersten Leistung, der ein erster Koeffizient $\alpha(t)$ zwischen 0 und 1 zugeordnet ist, und der zweiten Leistung enthält, der ein zweiter Koeffizient gleich 1-$\alpha(t)$ zugeordnet ist, um daraus die zulässige Höchstleistung für die Batterie abzuleiten.

**6.** Verfahren nach Anspruch 5, wobei der in der Batterie ($I_{bat}$) fließende Strom gemessen und der erste Koeffizient $\alpha(t)$ augenblicklich festgelegt wird als gleich:

- Eins bei der Inbetriebnahme des Fahrzeugs,
- einem erhöhten ersten Koeffizientenwert, wenn der gemessene in der Batterie fließende Strom negativ ist,
- einem verringerten ersten Koeffizientenwert, wenn der gemessene in der Batterie fließende Strom höher als eine Stromschwelle ist, oder
- einem erhöhten ersten Koeffizientenwert, wenn der in der Batterie fließende Strom zwischen Null und der Stromschwelle liegt, und der erste Koeffizient im vorhergehenden Augenblick erhöht wurde, oder einem verringerten ersten Koeffizientenwert, wenn der in der Batterie fließende Strom zwischen Null und der Stromschwelle liegt, und der erste Koeffizient im vorhergehenden Augenblick verringert wurde.

**7.** Verfahren nach Anspruch 5, wobei die an die Batterie während einer Periode (PowerAverage(t)) gelieferte mittlere Leistung gemessen und der erste Koeffizient $\alpha(t)$ augenblicklich festgelegt wird gleich:

- Eins bei der Inbetriebnahme des Fahrzeugs,
- einem erhöhten ersten Koeffizientenwert, wenn die mittlere Leistung niedriger ist als der zweite Höchstleistungswert, oder
- einem verringerten ersten Koeffizientenwert, wenn die mittlere Leistung höher ist als der zweite Höchstleistungswert.

**8.** Verfahren nach einem der Ansprüche 5 bis 7, wobei die Batterie aus einer oder mehreren Zellen besteht, und die Spannung an den Klemmen einer Zelle gemessen wird, außerdem die zulässige Höchstleistung für die Batterie ausgehend von einem dritten Höchstleistungswert begrenzt wird, der abhängig von einem Spannungshöchstwert und von der gemessenen Spannung der Zelle berechnet wird.

**Claims**

1. Motor vehicle with electric or hybrid propulsion comprising a rechargeable electric accumulation battery, a braking system allowing the recovery of energy, the battery being rechargeable during braking phases and during charging phases during which the vehicle is stationary under the control of a power supply system (2, 12) comprising means for determining a maximum allowable power for the battery (BATPIN), **characterized in that** the means for determining the maximum allowable power for the battery comprise a first mapping (3) making it possible to read a first maximum power ($BATPIN_{POWERMAP}(t)$) on the basis of the temperature and state of charge of the battery, a second mapping (4) making it possible to read a second maximum power ($ChaPow_{POWERMAP}(t)$) on the basis of the temperature and state of charge of the battery, the first maximum power being greater than the second maximum power, the first mapping comprising first maximum power values corresponding to a braking phase and the second mapping comprising second maximum power values corresponding to a charging phase of the battery, and means (5) for calculating said maximum allowable power for the battery, said means being designed to calculate the sum of the first power affected by a first coefficient $\alpha(t)$ between 0 and 1 and of the second power affected by a second coefficient equal to 1-$\alpha(t)$.

2. Vehicle according to Claim 1, further comprising means for measuring the current circulating in the battery ($I_{bat}$) and means for instantaneously calculating the first coefficient $\alpha(t)$ giving:

   - a first coefficient value equal to one during the start-up of the vehicle,
   - an increased first coefficient value if the measured current circulating in the battery is negative,
   - a decreased first coefficient value if the measured current circulating in the battery is greater than a current threshold, or
   - an increased first coefficient value if the current circulating in the battery is between zero and said current threshold and the first coefficient was increased at the previous time point or a decreased first coefficient value if the current circulating in the battery is between zero and said current threshold and the first coefficient was decreased at the previous time point.

3. Vehicle according to Claim 1, further comprising means for measuring the average power provided to the battery during a period ($PowerAverage(t)$) and means for instantaneously calculating the first coefficient $\alpha(t)$, giving:

   - a first coefficient value equal to one during start-up of the vehicle,
   - an increased first coefficient value if said average power is lower than said second maximum power value, or
   - a decreased first coefficient value if said average power is greater than said second maximum power value.

4. Vehicle according to any one of the preceding claims, wherein the battery is formed of one or more cells, the system comprising means for measuring the voltage at the terminals of one cell and additional means (13) for limiting the maximum allowable power for the battery providing a third maximum power value calculated depending on a maximum voltage value and the measured voltage of the cell.

5. Method for regulating the charging of a rechargeable electric accumulation battery for a motor vehicle with electric or hybrid propulsion comprising a braking system allowing the recovery of energy, the battery being rechargeable during braking phases and during charging phases during which the vehicle is stationary, **characterized in that** said method comprises a step of determining a first maximum power value ($BATPIN_{POWERMAP}(t)$) corresponding to a braking phase, a step of determining a second maximum power ($ChaPow_{POWERMAP}(t)$) corresponding to a charging phase of the battery, the first maximum power being greater than the second maximum power, and a step of adding together the first power affected by a first coefficient $\alpha(t)$ between 0 and 1 and the second power affected by a second coefficient 1-$\alpha(t)$ so as to deduce from this the maximum allowable power for the battery.

6. Method according to Claim 5, wherein the current circulating in the battery ($I_{bat}$) is measured and the first coefficient $\alpha(t)$ is fixed instantaneously, equal to:

   - one during start-up of the vehicle,
   - an increased first coefficient value if the measured current circulating in the battery is negative,
   - a decreased first coefficient value if the measured current circulating in the battery is greater than a current threshold, or
   - an increased first coefficient value if the current circulating in the battery is between zero and said current threshold and the first coefficient was increased at the previous time point or a decreased first coefficient value if the current circulating in the battery is between zero and said current threshold and the first coefficient was decreased at the previous time point.

7. Method according to Claim 5, wherein the average power provided to the battery during a period (*PowerAverage*(*t*)) is measured and the first coefficient $\alpha(t)$ is fixed instantaneously, equal to:

   - one during start-up of the vehicle,
   - an increased first coefficient value if said average power is lower than said second maximum power value, or
   - a decreased first coefficient value if said average power is greater than said second maximum power value.

8. Method according to any one of Claims 5 to 7, wherein the battery is formed of one or more cells, and the voltage at the terminals of one cell is measured, the maximum allowable power for the battery additionally being limited on the basis of a third maximum power value calculated depending on a maximum voltage value and the measured voltage of the cell.

# FIG.1

# FIG.2

# FIG.3

# FIG.4

# FIG.5

# FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5910722 A
- US 2012007545 A1
- US 2009218987 A1

**Littérature non-brevet citée dans la description**

- An improved Electric Vehicle Regenerative Braking Strategy Research. **QINSHENG SHI et al.** Advances in Computer Science And Information Engineering. 20 Mai 2012, 637-642
- Regenerative braking strategy for electric vehicles. **JINGANG GUO et al.** Intelligent Vehicles Symposium. IEEE, 03 Juin 2009, 864-868